# EUROPEAN PATENT APPLICATION

(11) **EP 1 953 576 A1**
(43) Date of publication of application: **06.08.2008**
(21) Application number: 08150724.6
(22) Date of filing: 28.01.2008
(51) Int. Cl.: G02B 6/00

(54) **Polarized Light Guide Plate With Improved Brightness And Method Of Manufacturing The Same**

(30) Priority: 01.02.2007 KR 20070010613
(71) Applicant: Samsung Electronics Co., Ltd., Suwon-si Gyeonggi-do 443-742 (KR)
(72) Inventor: Kim, Young-chan c/o Samsung Advanced Institute of Technology, Gyeonggi-do (KR); Hwang Seong-mo c/o Samsung Advanced Institute of Technology, Gyeonggi-do (KR); Nam, Seung-ho c/o Samsung Advanced Institute of Technology, Gyeonggi-do (KR)
(74) Representative: Greene, Simon Kenneth

(57) **Abstract**

A polarized light guide plate (LGP) (100), and a method of manufacturing the polarized LGP (100) are provided. The polarized LGP (100) includes: a light source (110); a first layer (130) that guides light emitted from the light source (110); a second layer (150) disposed on the first layer (130) and including a first emission unit having repetitive patterns extending in a first direction away from the light source (110); and a third layer (170) formed of an optically anisotropic material and disposed on or under the second layer (150), having an emission surface through which light is emitted, and including a second emission unit disposed on the emission surface and having repetitive patterns arranged in a second direction perpendicular to the first direction.

## Description

### BACKGROUND OF THE INVENTION

Apparatuses and methods consistent with the present invention relate to a polarized light guide plate (LGP) which emits polarized light and, more particularly, to a polarized LGP, which can emit polarized light with improved brightness by improving light distribution characteristics, and a method of manufacturing the polarized LGP.

Flat panel displays are classified into self-emissive displays, that generate light themselves to produce images, and non-emissive displays, which form images by receiving light from an external source. For example, liquid crystal displays (LCDs) are non-emissive flat panel displays. Non-emissive flat panel displays, such as LCDs, require an additional illumination system, such as a backlight unit.
Such illumination systems are classified into direct light type illumination systems and edge light type illumination systems according to the arrangement of a light source. Direct light type illuminations systems are configured such that a light source installed under a liquid crystal panel directly emits light onto the liquid crystal panel. Edge light type illumination systems are configured such that a light source is disposed on a side surface of a light guide plate (LGP). Direct light type illumination systems are suitable for large-size displays because light sources can be disposed freely and effectively in a large area. Edge light type illumination systems are suitable for small and medium-size displays, such as monitors or mobile phones, because a light source is disposed on a side surface of an LGP.
However, related art LCDs only use about 5% of light emitted from a light source to form images. Such low light use efficiency is due to light loss when the light passes through an LGP and many optical films disposed on the LGP and, particularly due to light absorption by polarization plates and color filters in the LCDs. LCDs create images by transmitting or blocking light according to the alignment of liquid crystal molecules, which is modified by an electric field, and the polarization direction of incident light. That is, an LCD uses only linearly polarized light in one direction. To this end, polarization plates are disposed on both surfaces of the LCD. The polarization plates disposed on both surfaces of the LCD are absorptive polarization plates that transmit light polarized in one direction and absorb light polarized in other directions. Since the polarization plates absorb about 50% of incident light, the absorptive polarization plates are factors that contribute to the low light utilization efficiency of the LCD.

In order to solve this problem, much research has been conducted to improve light use efficiency by replacing absorptive polarization plates or converting most of light into light having the same polarization direction as the polarization direction of a rear surface polarization plate disposed on a rear surface of an LCD. For example, a multi-layered reflective polarization film, such as a dual brightness enhancement film (DBEF), may be attached onto an LGP in order to increase the light use efficiency of the LCD. However, due to the expense of the reflective polarization film and the absence of a polarization conversion element, it is difficult to increase light use efficiency. Therefore, there is a need for focused research on a polarized LGP that can polarize and convert light by itself.

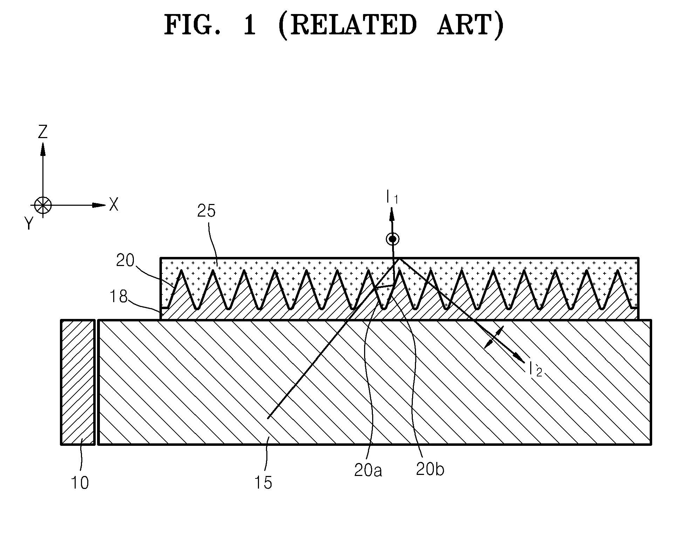

FIG. 1 is a cross-sectional view of a related art polarized LGP that emits polarized light. The conventional polarized LGP includes a light source 10, a first layer 15 formed of an isotropic material, a second layer 18 formed on the first layer 15, and a third layer 25 formed of an anisotropic material on the second layer 18.

The second layer 18 is an adhesive layer having a prism array 20. The third layer 25 has a refractive index that is dependent on the polarization direction of incident light. For example, with respect to light l₁ having a first polarization, the third layer 25 has a first refractive index greater than that of each of the first layer 15 and the second layer 18. With respect to light I₂ having a second polarization, the third layer 25 has a second refractive index almost the same as that of each of the first layer 15 and the second layer 18. Since there is no refractive index difference between the layers, the light l₂ having the second polarization is linearly transmitted through an interface between the first layer 15 and the second layer 18, and an interface between the second layer 18 and the third layer 25 without refraction, and is totally reflected by a top surface of the third layer 25, thereby failing to exit to the outside. On the contrary, the light l₁ having the first polarization is refracted at a first surface 20a which is an interface between the second layer 18 and the third layer 25, such that an emission angle becomes less than the incident angle of the light I₁ having the first polarization, and the light I₁ having the first polarization is directed toward a second surface 20b. The light I₁ having the first polarization is totally reflected by the second surface 20b to the top surface of the third layer 25. Since the light l₁ having the first polarization is incident on the top surface of the third layer 25 at an angle less than a critical angle at which total reflection occurs, the light I₁ having the first polarization exits the third layer 25 upward.

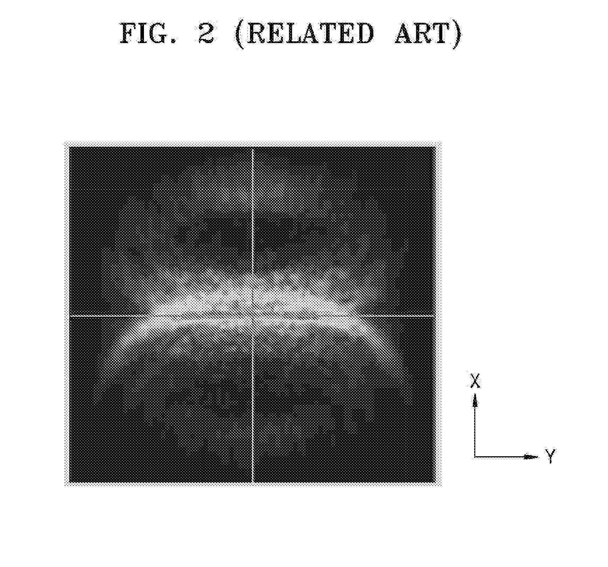

FIG. 2 is a simulation result illustrating the distribution of light emitted from the related art LGP of FIG. 1. Referring to FIG. 2, the light emitted from the related art LGP is widely distributed in a Y direction, that is, in the lengthwise direction of the prism array 20 of the second layer 18 and has a full width at half maximum (FWHM) of approximately ±80°. As the FWHM decreases, brightness increases. To this end, an additional optical film is required.

### SUMMARY OF THE INVENTION

Exemplary embodiments of the present invention provide a polarized light guide plate, which can improve brightness by changing light distribution without an additional optical film, and a method of manufacturing the polarized light guide plate.
According to an aspect of the present invention, there is provided a polarized light guide plate comprising: a light source; a first layer which guides light emitted from the light source; a second layer disposed on the first layer and including a first emission unit having repetitive patterns extending in a first direction away from the light source; and a third layer formed of an optically anisotropic material and disposed on the second layer, having an emission surface through which light is emitted, and including a second emission unit disposed on the emission surface and having repetitive patterns arranged in a second direction perpendicular to the first direction.

According to another aspect of the present invention, there is provided an illumination system comprising: a light source; a first layer which guides light emitted from the light source; a second layer disposed under the first layer and including a first emission unit having repetitive patterns extending in a first direction away from the light source; a third layer formed of an optically anisotropic material and disposed under the second layer, having an emission surface through which light is emitted, and including a second emission unit disposed on the emission surface and having repetitive patterns arranged in a second direction perpendicular to the first direction; and a reflecting member disposed under the third layer.
According to another aspect of the present invention, there is provided a method of manufacturing a polarized light guide plate, the method comprising: preparing a first plate formed of an optically anisotropic material; forming a first stamper having engraved first prism patterns arranged in a first direction; forming a second stamper having engraved second prism patterns arranged in a second direction perpendicular to the first direction; hot embossing top and bottom surfaces of the first plate using the first stamper and the second stamper; and sequentially disposing an adhesive material and the hot embossed first plate on a second plate formed of an optically isotropic material and directing ultraviolet rays to the resultant structure.

### BRIEF DESCRIPTION OF THE DRAWINGS

The patent or application file contains at least one drawing executed in color. Copies of this patent or patent application publication with color drawings will be provided by the Office upon request and payment of the necessary fee.
The above and other features and advantages of the present invention will become more apparent by describing in detail exemplary embodiments thereof with reference to the accompanying drawings, in which:
FIG. 1 is a cross-sectional view of a related art polarization light guide plate (LGP) emitting polarized light;
FIG. 2 is a simulation result illustrating the distribution of light emitted from the related art polarized LGP of FIG. 1;
FIG. 3 is an exploded perspective view of a polarized LGP according to an exemplary embodiment of the present invention;
FIGS. 4A and 4B are cross-sectional views taken along different lines of FIG. 3;
FIGS. 5A through 5E are simulation results illustrating the distributions of light emitted from the polarized LGP of FIG. 3 when an angle θ=160°, θ=140°, θ=120°, θ=100°, and θ=80°, respectively;
FIGS. 6A and 6B are measurement results illustrating the distribution of light emitted from a related art polarized LGP and the distribution of light emitted from the polarized LGP of FIG. 3, respectively, when the angle θ=114°;
FIG. 7 is a perspective view of a polarized LGP according to another exemplary embodiment of the present invention; and
FIGS. 8A through 8D illustrate a method of manufacturing a polarized LGP according to an exemplary embodiment of the present invention.

### DETAILED DESCRIPTION OF EXEMPLARY EMBODIMENTS OF THE INVENTION

The present invention will now be described more fully with reference to the accompanying drawings, in which exemplary embodiments of the invention are shown. The invention may, however, be embodied in different forms and should not be construed as limited to the exemplary embodiments set forth herein. Rather, these embodiments are provided so that this disclosure will be thorough and complete, and will fully convey the scope of the invention to those skilled in the art. Like reference numerals refer to like elements throughout. In the drawings, the thicknesses of layers and regions and the sizes of components may be exaggerated for clarity.

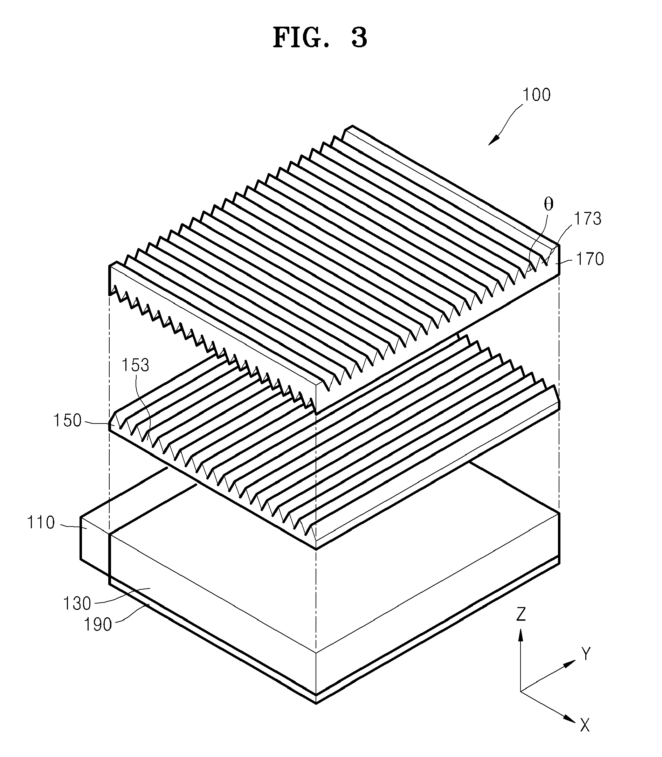

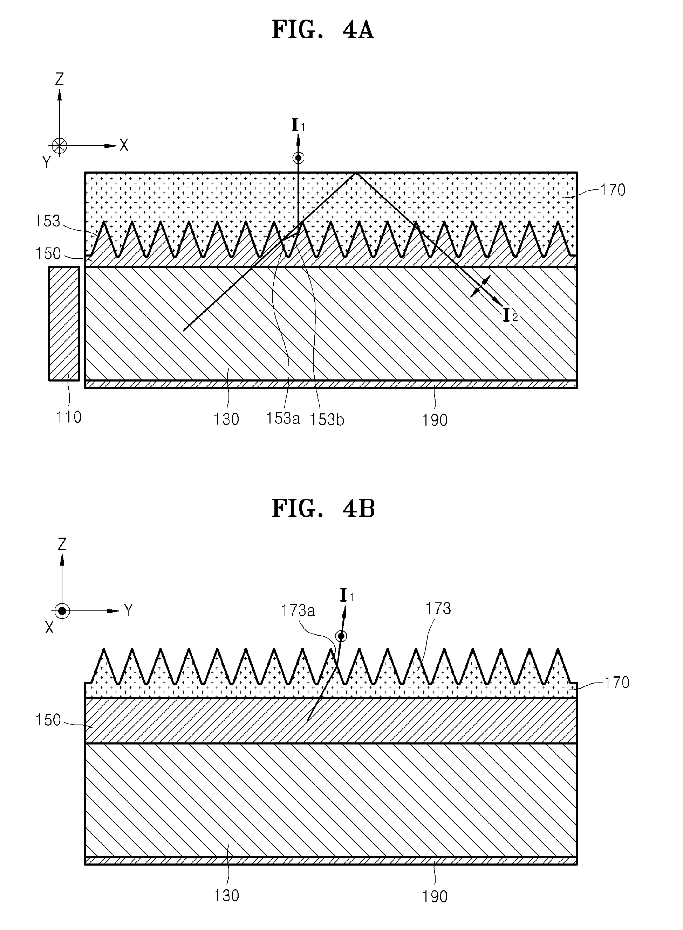

FIG. 3 is an exploded perspective view of a polarized light guide plate (LGP) 100 according to an exemplary embodiment of the present invention. FIGS. 4A and 4B are cross-sectional views taken along different lines of FIG. 3. Referring to FIGS. 3 through 4B, the polarized LGP 100 includes a light source 110, a first layer 130 guiding light emitted from the light source 110, a second layer 150 formed on the first layer 130 and including a first emission unit 153 having repetitive patterns, and a third layer 170 formed of an optically anisotropic material on the second layer 150 and including a second emission unit 173 having repetitive patterns.

The light source 110 may be a line light source, such as a cold cathode fluorescent lamp (CCFL), or a point light source, such as a light emitting diode (LED).
The first layer 130, which guides light emitted from the light source 110, is formed of an optically isotropic material.
The second layer 150 is formed of an optically isotropic material, and the first emission unit 153 of the second layer 150 has repetitive patterns extending in a first direction away from the light source 110, that is, in an X direction in FIGS. 3 through 4B. The lengthwise direction of the first emission unit 153 is parallel to the lengthwise direction of the light source 110, that is, to a Y direction in FIGS. 3 through 4B. The first emission unit 153 may have prism patterns having a first surface 153a and a second surface 153b. The refractive index of the second layer 150 may be the same as or similar to that of the first layer 130.
The third layer 170, which is formed of the optically anisotropic material on the second layer 150, has a refractive index nₑ with respect to extraordinary light having a first polarization and a refractive index no with respect to ordinary light having a second polarization. For example, the refractive index no of the third layer 170 with respect to the light having the second polarization is the same as or similar to that of each of the first layer 130 and the second layer 150, and the refractive index nₑ of the third layer 170 with respect to the light having the first polarization is greater than that of each of the first layer 130 and the second layer 150. The first polarization may be S-polarization, and the second polarization may be P-polarization. Also, a top surface of the third layer 170 is an emission surface through which light is emitted, and the second emission unit 173 is formed on the emission surface and has repetitive patterns arranged in a direction perpendicular to the arrangement direction of the first emission unit 153. The second emission unit 173 may have prism patterns whose apex angle is θ. The apex angle θ may range from approximately 100° to 120°.

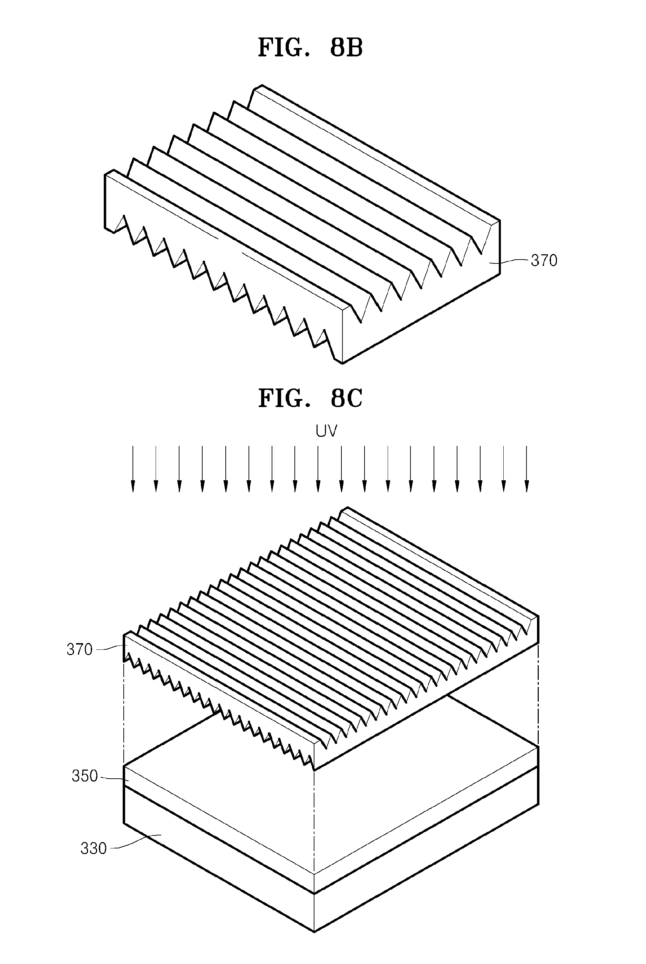

A polarization conversion member 190 may be further disposed on a bottom surface of the first layer 130. The polarization conversion member 190 may comprise a quarter wave plate and a reflecting plate.
The operation of the polarized LGP 100 to emit polarized light with improved light distribution characteristics will now be explained.
Referring to FIG. 4A, light emitted from the light source 110 is directed toward a top or bottom surface of the first layer 130, and the light directed toward the bottom surface of the first layer 130 is totally reflected by the bottom surface of the first layer 130 to the top surface of the first layer 130. Among the light directed toward the top surface of the first layer 130, light l₁ having a first polarization is refracted at the first surface 153a of the first emission unit 153 toward the second surface 153b and totally reflected by the second surface 153b to the top surface of the third layer 170. Among the light directed toward the top surface of the first layer 130, light I₂ having a second polarization is transmitted through interfaces between the respective layers without refraction, incident on the top surface of the third layer 170 at an angle greater than a critical angle, and totally reflected by the top surface of the third layer 170. The light l₂ having the second polarization which fails to exit the top surface of the third layer 170 travels inside the first layer 130, such that when the polarization of the light l₂ is converted into a first polarization by the polarization conversion member 190, the light l₂ exits the top surface of the third layer 170 upward.
Referring to FIG. 4B, the light l₁ having the first polarization totally reflected to the third layer 170 is refracted and transmitted through a third surface 173a of the second emission unit 173. Since an emission angle is greater than the angle of the light I₁ having the first polarization incident on the third layer 170, the distribution of the light I₁ refracted and transmitted through the third surface 173a is narrow in the Y direction.

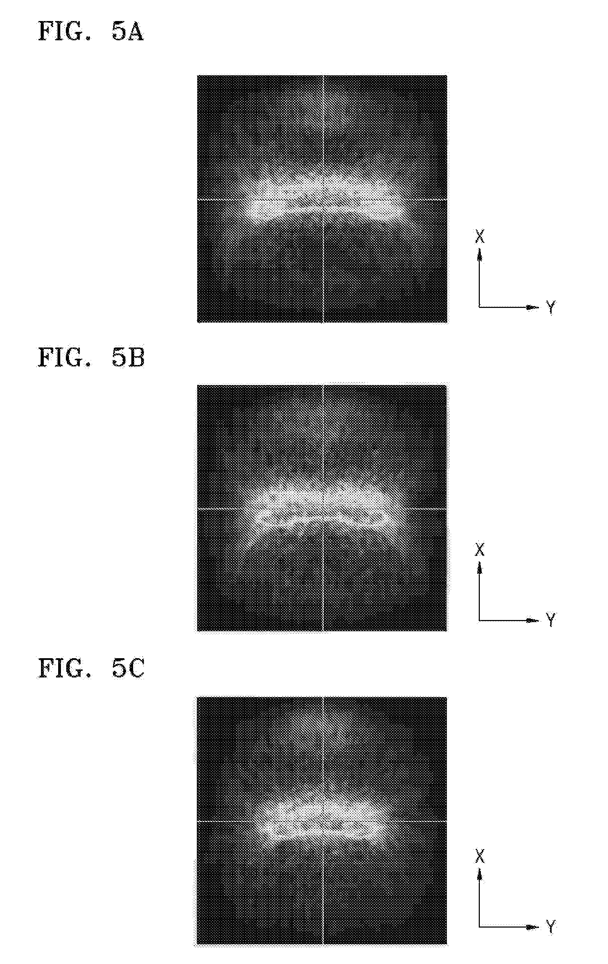

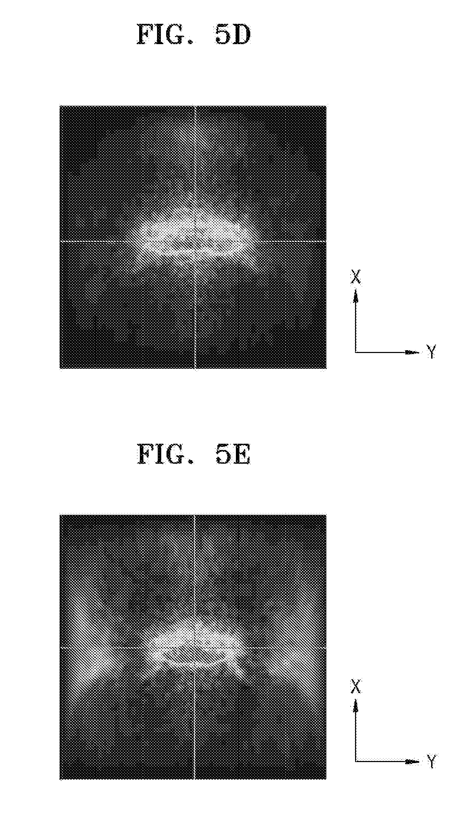

FIGS. 5A through 5E are simulation results illustrating the distributions of light emitted from the polarized LGP 100 of FIG. 3 when the apex angle θ=160°, θ=140°, θ=120°, θ=100°, and θ=80°. Here, the refractive index nₑ of the third layer 170, which is formed of the anisotropic material, with respect to extraordinary light is 1.7, and the refractive index no of the third layer 170 with respect to ordinary light is 1.51. Referring to FIGS. 5A through 5E, as the apex angle θ decreases, the distribution width of emitted light decreases in a Y direction. When the apex angle θ is 120°, a full width at half maximum (FWHM) is approximately ±40°, which is much less than ±80° of a related art polarized LGP of FIG. 2.

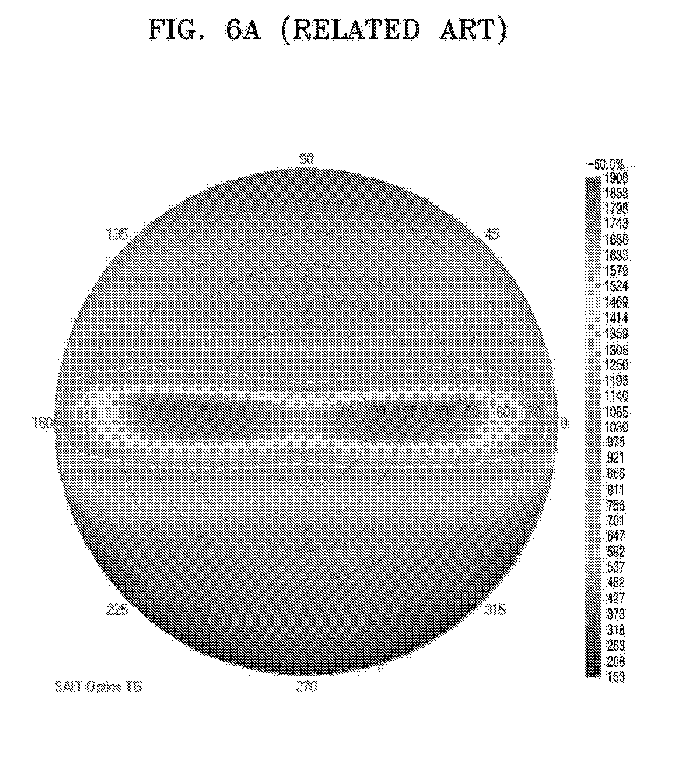

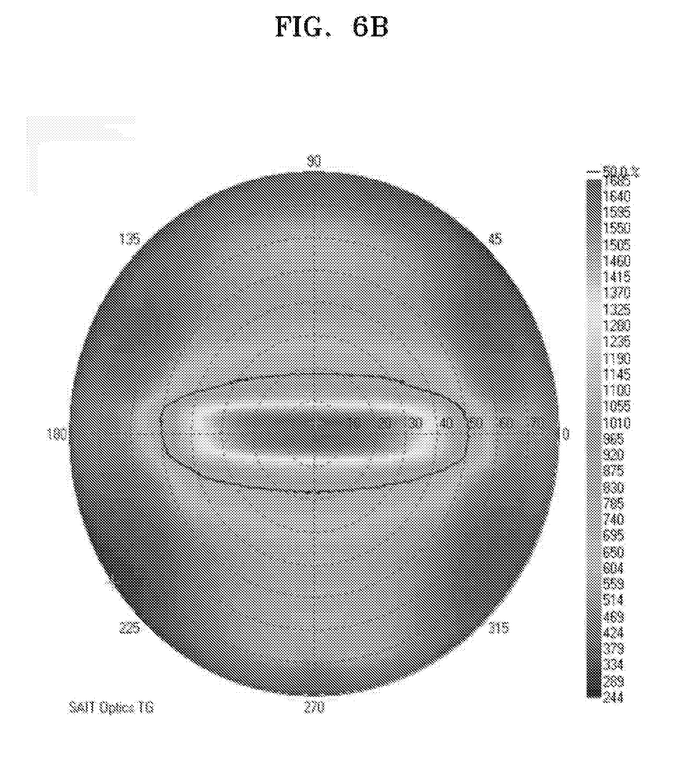

FIGS. 6A and 6B are measurement results illustrating the distribution of light emitted from a related art polarized LGP and the distribution of light emitted from the polarized LGP 100 of FIG. 3, when the apex angle θ is 114°. The FWHM of the polarized LGP 100 of FIG. 3 is approximately ±50° which is much less than that of the related art polarized LGP.
It can be seen from the simulation and measurement results that the optimal range of the apex angle θ is approximately 100° to 120°. However, since the optimal range of the apex angle θ is dependent on the refractive index of the third layer 170 formed of the anisotropic material, the apex angle θ is properly determined considering the refractive index of the third layer 170.

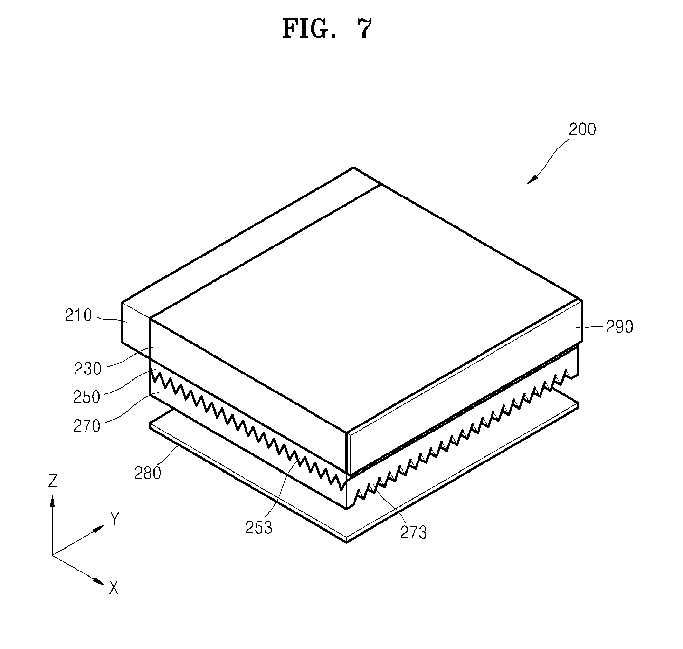

FIG. 7 is a perspective view of a polarized LGP 200 according to another exemplary embodiment of the present invention. Referring to FIG. 7, the polarized LGP 200 includes a light source 210, a first layer 230 that guides light emitted from the light source 210, a second layer 250 formed under the first layer 230 and including a first emission unit 253 having repetitive patterns, a third layer 270 formed of an anisotropic material under the second layer 250 and including a second emission unit 273 having repetitive patterns, and a reflecting member 280 disposed under the third layer 370. The first emission unit 253 and the second emission unit 273 may have repetitive prism patterns arranged in directions perpendicular to each other. The polarized LGP 200 of FIG. 7 is different from the polarized LGP 100 of FIG. 3 in the positions of the second layer 250 and the third layer 270. Unlike in FIG. 3, the second layer 250 and the third layer 270 are disposed under the first layer 230, and the reflecting member 280 is disposed under the third layer 230. Also, a polarization conversion member 290 may be disposed on a side surface of the first layer 230. Among light emitted from the light source 210, light directed toward a top surface of the first layer 230 is totally reflected downward, and light directed toward a bottom surface of the first layer 230 passes through the second layer 230 and the third layer 250 and is emitted downward. The operation of the polarized LGP 200 of FIG. 7 to separate light having a predetermined polarization from the light passing through the second layer 230 and the third layer 250 and emit light with improved light distribution characteristics is substantially the same as that of the polarized LGP 100 of FIG. 3. The light emitted downward is reflected by the reflecting member 280 to the top surface of the first layer 230.

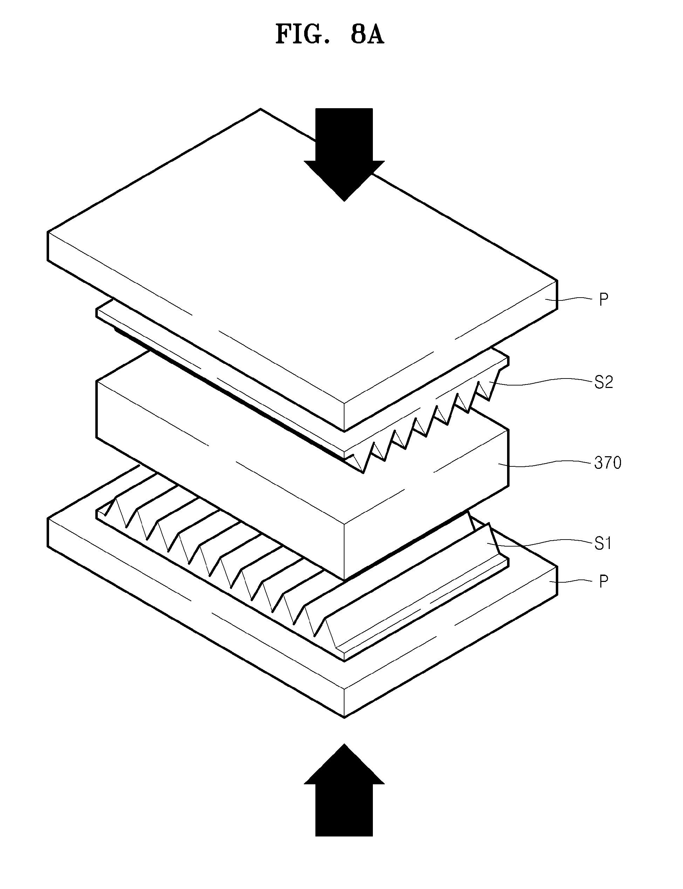

FIGS. 8A through 8D illustrate a method of manufacturing a polarized LGP according to an exemplary embodiment of the present invention.
Referring to FIG. 8A, a first plate 370 formed of an optically anisotropic material, a first stamper S1 having first prism patterns formed by engraving, and a second stamper S2 having second prism patterns formed by engraving. The first prism patterns and the second prism patterns are arranged in directions perpendicular to each other. Next, top and bottom surfaces of the first plate 370 are, for example, hot embossed using the first stamper S1 and the second stamper S2. That is, the first plate 370 is sandwiched between the first stamper S1 and the second stamper S2, and is hot pressed by a press P.
Referring to FIG. 8B, prism patterns are formed on both the top and bottom surfaces of the first plate 370 by the hot embossing process.
Referring to FIG. 8C, a second plate 330 formed of isotropic material is prepared, an adhesive material layer 350 and the hot embossed first plate 370 are sequentially disposed on the second plate 330, and ultraviolet rays are directed toward the resultant structure to cure the adhesive material layer 350 so that the first plate 370 and the second plate 330 adhere together with the adhesive material layer 350.

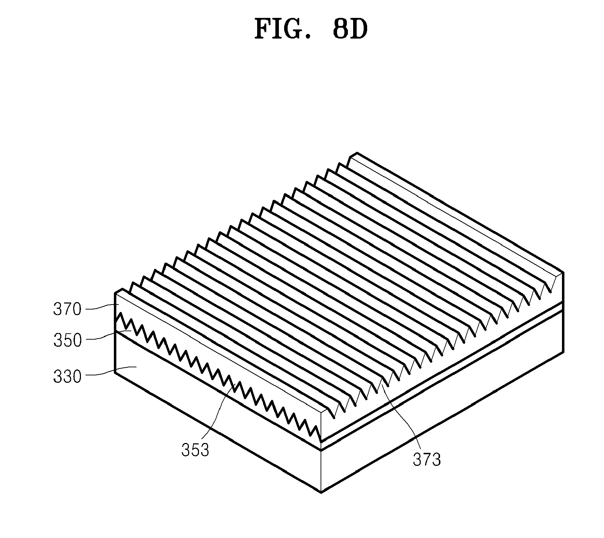

FIG. 8D illustrates a main structure of the polarized LGP manufactured by the above method. Referring to FIG. 8D, the manufactured polarized LGP includes a first emission unit 353 having patterns and adapted to separate polarization, and a second emission unit 373 having patterns arranged in a direction perpendicular to the patterns of the first emission unit 353 and adapted to reduce the distribution width of emitted light in the lengthwise direction of the first emission unit 353.
As described above, since the polarized LGP consistent with the present invention includes the first emission unit for separating polarization and the second emission unit formed on the top surface of the anisotropic material layer and having the patterns arranged in the direction perpendicular to those of the first emission unit, the FWHM of emitted light can be reduced and brightness can be enhanced. Also, the polarized LGP manufacturing method consistent with the present invention can easily manufacture the polarized LGP constructed as described above.
While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A polarized light guide plate (100) comprising:
a light source (110);
a first layer (130) adapted to guide light emitted from the light source;
a second layer (150) disposed on the first layer and including a first emission unit (153) having repetitive patterns extending in a first direction away from the light source; and
a third layer (170) formed of an optically anisotropic material and disposed on or under the second layer, having an emission surface through which light is emitted, and including a second emission unit (173) disposed on the emission surface and having repetitive patterns arranged in a second direction substantially perpendicular to the first direction.

2. The polarized light guide plate of claim 1, wherein each of the first emission unit and the second emission unit has prism patterns.

3. The polarized light guide plate of claim 2, wherein the prism patterns of the second emission unit have an apex angle in the range of 100° to 120°.

4. The polarized light guide plate of any preceding claim, further comprising a polarization conversion member disposed on a surface of the first layer.

5. The polarized light guide plate comprising of any preceding claim, further comprising:
a reflecting member (280) disposed under the third layer.

6. A method of manufacturing a polarized light guide plate, the method comprising:
preparing a first plate (370) formed of an optically anisotropic material;
forming a first stamper having engraved first prism patterns arranged in a first direction;
forming a second stamper having engraved second prism patterns arranged in a second direction perpendicular to the first direction;
embossing top and bottom surfaces of the first plate using the first stamper and the second stamper; and
sequentially disposing an adhesive material (350) and the embossed first plate on a second plate (330) formed of an optically isotropic material and directing ultraviolet rays to the resultant structure.

7. The method of claim 6, wherein at least one of the first prism patterns and the second prism patterns have an apex angle of 100° to 120°.
